# EUROPÄISCHE PATENTANMELDUNG

(11) **EP 0 692 454 A2**
(43) Veröffentlichungstag der Anmeldung: **17.01.1996**
(21) Anmeldenummer: 95110449.6
(22) Anmeldetag: 05.07.1995
(51) Int. Cl.: C01B 37/00, B01J 29/04, B01J 20/10, C09C 1/28, C09C 1/40, C09C 1/36

(54) **Kristalline Silikatfestkörper**

(30) Priorität: 14.07.1994 DE 4424815
(71) Anmelder: BASF Aktiengesellschaft, D-67063 Ludwigshafen (DE)
(72) Erfinder: Gies, Herman, Prof. Dr., D-45549 Sprockhövel (DE); Vortmann, Silke, D-45239 Essen (DE); Marler, Bernd, Dr., D-42799 Leichlingen (DE); Müller, Ulrich, Dr., D-67434 Neustadt (DE); Dingerdissen, Uwe, Dr., D-64342 Seeheim-Jugenheim (DE)

(57) **Zusammenfassung**

Kristalline Festkörper von Boro-, Alumo-, Gallo-, Titano-, Vanado-, Zinkosilikaten oder deren Gemische mit RUB-13 Struktur gefunden, welche dadurch gekennzeichnet sind, daß sie innerhalb einer monoklinen Raumgruppe vorliegen und ein Röntgenbeugungsmuster aufweisen, in dem mindestens die folgenden Reflexe (hkl) bei den angegebenen Beugungswinkeln auftreten:

| h | k | l | Intensität I/Iₒ | Beugungswinkel 2 Theta |
|---|---|---|---|---|
| 0 | 2 | 0 | sehr stark | 10.26 |
| 0 | 1 | 1 | sehr stark | 9.79 |
| -1 | 3 | 1 | schwach | 4.98 |
| 0 | 4 | 1 | mittel | 4.53 |
| -2 | 0 | 1 | mittel | 4.52 |
| -1 | 1 | 2 | mittel | 4.46 |

sowie deren Verwendungen.

## Beschreibung

Die vorliegende Erfindung betrifft kristalline Festkörper von Boro-, Alumo-, Gallo-, Titano-, Vanado-, Zinkosilikaten oder deren Gemische mit RUB-13 Struktur, die innerhalb einer monoklinen Raumgruppe vorliegen und ein charakteristisches Röntgenbeugungsmuster aufweisen.

Aus der Angew. Chem. 100 (1988) 232 bis 251 sind borhaltige Zeolithe als Heterogenkatalysatoren bekannt. Insbesondere finden Borzeolithe mit Pentasilstruktur Anwendung (US-A-4 285 919 und EP-A-68 796). Solche Borsilikate mit Pentasilstruktur werden hergestellt, indem man ein Synthesegel bestehend aus Wasser, einer Borquelle und Siliciumdioxid in geeigneter Weise unter Zusatz von organischen, stickstoffhaltigen Verbindungen unter hydrothermalen Bedingungen und gegebenenfalls unter Zusatz von Alkali oder Fluorid als Mineralisator kristallisiert. Als stickstoffhaltige Verbindung kommen etwa 1,6-Diaminohexan (EP-A-7 081) oder die Salze des Tetrapropylammoniums in Frage.

Die vorstehenden borhaltigen Zeolithe bzw. Borzeolithe mit Pentasilstruktur haben die Nachteile, daß sie zu mittelporigen Zeolithen mit 10 MR-Kanalöffnungen zählen. Formselektive Umsetzungen, insbesondere kleiner Moleküle sind damit nicht oder nur schwer möglich.

Der verliegenden Erfindung lag daher die Aufgabe zugrunde, den zuvor genannten Nachteilen abzuhelfen.

Demgemäß wurden neue und verbesserte kristalline Festkörper von Boro-, Alumo-, Gallo-, Titano-, Vanado-, Zinkosilikaten oder deren Gemische mit RUB-13 Struktur gefunden, welche dadurch gekennzeichnet sind, daß sie innerhalb einer monoklinen Raumgruppe vorliegen und ein Röntgenbeugungsmuster aufweisen, in dem mindestens die folgenden Reflexe (hkl) bei den angegebenen Beugungswinkeln auftreten:

| h | k | l | Intensität I/Iₒ | Beugungswinkel 2 Theta |
|---|---|---|---|---|
| 0 | 2 | 0 | sehr stark | 10.26 |
| 0 | 1 | 1 | sehr stark | 9.79 |
| -1 | 3 | 1 | schwach | 4.98 |
| 0 | 4 | 1 | mittel | 4.53 |
| -2 | 0 | 1 | mittel | 4.52 |
| -1 | 1 | 2 | mittel | 4.46 |

sowie deren Verwendungen.

Die neue kristallinen Festkörper von Boro-, Alumo-, Gallo-, Titano-, Vanado-, Zinkosilikaten oder deren Gemische mit RUB-13 Struktur lassen sich wie folgt herstellen:
Die neuartigen kristallinen Festkörper von Boro-, Alumo-, Gallo-, Titano- Vanado- und Zinkosilikate, insbesondere das Borosilikat - nachfolgend als RUB-13 bezeichnet - entstehen, wenn man dem Syntheseansatz als Schablonenverbindung ein Piperidin oder methylsubstituierte Piperidine und eine Diaminverbindung oder deren Gemische im molaren Verhältnis von Si/Piperidin von 0,4:1, bevorzugt von 0,8:1 zufügt und im wesentlichen in Abwesenheit einer Alkali- oder Erdalkalimetallverbindungen, d.h. man fügt der Mischung keine Alkali- oder Erdalkalimetallverbindungen zu. Das molare Verhältnis von Si/(Si+A), insbesondere von Si/(Si+B) beträgt in der Regel 0,6:1 bis 2:1, bevorzugt 0,95:1 bis 1:1. Die Schablonenverbindungen sind Mischungen aus Amin- und Diaminverbindung in der Regel im Molverhältnis von 0,1:1 bis 20:1, bevorzugt 1:1 bis 10:1, besonders bevorzugt 3:1 bis 6:1, bevorzugt aus Ethylendiamin mit Pentamethylpiperidin, insbesondere aus Ethylendiamin mit 1,2,2,6,6- Pentamethylpiperidin. Bei Abweichungen von den vorgenannten Molverhältnissen und Bedingungen kann es zu der in J. Incl. Phenomena, 5 (1987) 283 bis 287 beschriebenen Bildung des Dodecasil-1H kommen.

Es ist vorteilhaft im Synthesegel vor dem Beginn der Kristallisation folgende molaren Verhältnisse einzustellen:
SiO₂/AOₙ: 5:1 bis 0,1:1, bevorzugt 0,9:1 bis 0,3:1 H₂O/SiO₂: 25:1 bis 250:1, bevorzugt 100:1 bis 150:1 Amin- oder Diaminverbindung oder deren Gemische/SiO₂: 2,5:1 bis 1,5:1, bevorzugt 2:1 bis 1;7:1.

A bedeutet Bor, Aluminium, Gallium, Titan, Vanadium und Zink, bevorzugt Bor, Aluminium, und besonders bevorzugt Bor und n die Wertigkeit von A.

Als Amine eignen sich solche der allgemeinen Formel I 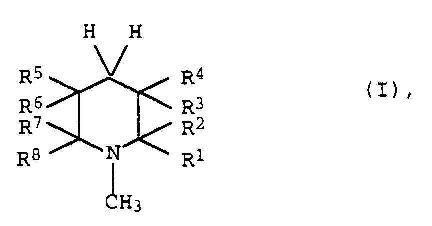
in der R¹ bis R⁸ Wasserstoff, Methyl oder Ethyl, bevorzugt Wasserstoff oder Methyl bedeuten, und als Diamine eignen sich solche der allgemeinen Formel II

H₂N - (CH₂)ᵣ - NH₂ (II),

in der r eine ganze Zahl von 1 bis 5, bevorzugt 2 bis 3, besonders bevorzugt 2 bedeutet.

Die Kristallisation der phasenreinen Struktur des RUB-13 erfolgt in der Regel bei Temperaturen von 120 bis 200°C, bevorzugt 140 bis 180°C, besonders bevorzugt 150 bis 170°C in der Regel innerhalb eines Zeitraums von 5 bis 120 Tagen, wobei bereits nach ca. 80 Tagen gut kristallines Produkt erhalten werden kann. Durch starkes Rühren während der Kristallisation kann diese Synthesedauer deutlich verringert werden.

Nach der Kristallisation kann die erfindungsgemäße Phase nach an sich bekannten Methoden abfiltriert, gewaschen und bei 100 bis 120°C getrocknet werden.

Das solcherart erfindungsgemäße Borosilikat ergibt das in Tabelle 1 angegebene Röntgendiffraktogramm mit einer Zuordnung zu einer monoklinen Raumgruppensymmetrie und den Abmessungen der Elementarzelle von a = 9,659 °C, b = 20,46 °C, c = 9,831 °C und dem Raumwinkel beta = 96,58°C.

Zur Entfernung der in den Poren noch vorliegenden Amin- bzw. Diaminverbindungen kann das erfindungsgemäße Material noch einer thermischen Behandlung an Luft oder unter Stickstoff unterzogen werden. Dabei ist es vorteilhaft, das Abbrennen des Templates unter Bedingungen vorzunehmen, die den Temperaturanstieg auf Werte unter 850°C begrenzen.

Zur Modifizierung des erfindungsgemäßen Boro-, Alumo-, Gallo-, Titano-, Vanado- und Zinkosilikate, insbesondere Borosilikate können die nach dem derzeitigen Stand der Technik bekannten Methoden der Verformung, des Ionenaustausches und/oder der Imprägnierung mit Metall-, Edelmetall- oder Alkali- und Erdalkalimetalle, der Oberflächenmodifizierung, beispielsweise über CVD, oder chemische Derivatisierungen, wie etwa Silylierungen verwendet werden.

Als Anwendungen der neuartigen Boro-, Alumo-, Gallo-, Titano-, Vanado- und Zinkosilikate oder deren Gemische mit RUB-13 Struktur in der Katalyse sind solche Reaktionen vorteilhaft, die sowohl die katalytischen Eigenschaften der Elemente Bor, Aluminium, Gallium, Titan, Vanadium und Zink, insbesondere des Bors verlangen, als auch unter Ausnutzung der Formselektivität im Porengefüge des RUB-13 ablaufen können.

Insbesondere sind dies Aminierungsreaktionen, wie sie von der Reaktion her z.B. in Chem. Abstr., Vol. 118, 6620d oder US-A-4 375 002 genannt sind. Dabei hat das erfindungsgemäße Material den Vorteil, daß Bor bereits unmittelbar bei der Synthese in das Silikatgitter eingebaut und fixiert wird und dem Zeolithen vorteilhaft eine schwache bis mittlere Azidität verleiht.

Ebenso kann das erfindungsgemäße Material in entsprechend modifizierter Form Verwendung finden für Hydrierungen, Dehydrierungen, Oxidehydrierungen, Polymerisationsreaktionen, Hydratisierungen und Dehydratisierungen, Veresterungen und Umesterungen, nukleophile und elektrophile Substitutionsreaktionen, Additions- und Eliminationsreaktionen, Doppelbindungs- und Skelettisomerisierungen, Dehydrocyclisierungen, Dehydrohalogenierungen, Epoxid-Aldehydumlagerungen, sowie Kondensationsreaktionen vom Typ der Aldolkondensationen.

Ebenso kann das erfindungsgemäße Material zur Umwandlung von Methanol zu Olefinen, zur Oligomerisierung von Olefinen oder zur Herstellung von Ethern aus Alkoholen und Olefinen, sowie zum Aromatenaufbau ausgehend von Olefinen eingesetzt werden.

Unter geeigneten Bedingungen oder nach geeigneter Modifizierung des Materials können auch Reaktionen wie katalytisches Cracken, Hydrocracken oder Reforming betrieben werden.

Weiterhin dient das erfindungsgemäße Material, gegebenenfalls noch modifiziert mit Cu oder Metallen der Pt-Gruppe, als Katalysator oder Träger zur katalytischen Abgasbehandlung in DeNOₓ- oder DeSOₓ-Verfahren.

Abhängig vom umzusetzenden Molekül können die katalytischen Reaktionen vorteilhaft in Gas- oder Flüssigphase, oder aber auch in überkritischer Phase durchgeführt werden.

Bei der Anwendung als Sorptionsmittel kann man vorteilhafterweise die hohe innere Oberfläche des erfindungsgemäßen Materials ausnutzen, aber auch Moleküle aufgrund ihres Unterschiedes in der Molekülgröße voneinander trennen. Dabei werden insbesondere kleine Moleküle mit kinetischen Durchmessern von 4 bis 5 Å bevorzugt adsorbiert.

Je nach Molekül kann die Adsorption in Gas- oder Flüssigphase erfolgen. Desaktivierte Katalysatoren oder Adsorbentien des erfindungsgemäßen Borosilikats können durch kontrolliertes Abbrennen von Kohlenstoffbelegungen im Temperaturbereich von 350 bis 650°C wieder in eine aktive Form zurückgeführt werden.

### Beispiele

### Beispiel 1

In einem PP-Becher werden 0.74 ml Tetramethoxysilan (Fluka, 99.5%) mit 10 ml einer 1-molaren wäßrigen Lösung von Ethylendiamin unter Rühren versetzt. Der homogenen Lösung setzt man 4.1 ml einer bei Raumtemperatur gesättigten Borsäurelösung zu und gibt 0.38 µl Pentamethylpiperidin (Aldrich) hinzu. Die Reaktionslösung wird in Kieselglasampullen eingeschweißt und bei 160°C in einem Ofen innerhalb von 80 Tagen zur Reaktion gebracht. Nach dem Erkalten wird die Ampulle geöffnet, das Produkt abfiltriert, neutralgewaschen und bei 120°C über Nacht getrocknet. Das Syntheseprodukt weist das in Tabelle 1 gezeigte für RUB-13 typische Röntgendiffraktogramm auf.

**Tabelle 1**

| Struktur und Indizierung des RUB-13 | | | |
|---|---|---|---|
| 2Θ (beob.) | [°] dₕₖₗ (beob.) [Å] | rel. Intensität | hkl |
| 8.611 | 10.2605 | 100 | 020 |
| 9.021 | 9.7995 | 95 | 001 |
| 10.148 | 8.7096 | 38 | 110 |
| 14.302 | 6.1879 | 16 | 130 |
| 15.900 | 5.5694 | 18 | 131 |
| 17.796 | 4.9801 | 30 | -131 |
| 19.575 | 4.5313 | 90 | 041 |
| 19.623 | 4.5203 | 40 | -201 |
| 19.881 | 4.4623 | 40 | -112 |
| 20.122 | 4.4094 | 45 | 022 |
| 20.425 | 4.3446 | 20 | 220 |
| 21.461 | 4.1372 | 7 | -221 |
| 23.231 | 3.8258 | 26 | 221 |
| 23.390 | 3.8002 | 9 | -132 |
| 25.046 | 3.5525 | 12 | 132 |
| 25.181 | 3.5338 | 40 | 042 |
| 24.419 | 3.4968 | 17 | 240 |
| 25.718 | 3.4612 | 35 | 151 |
| 25.983 | 3.4265 | 14 | -222 |

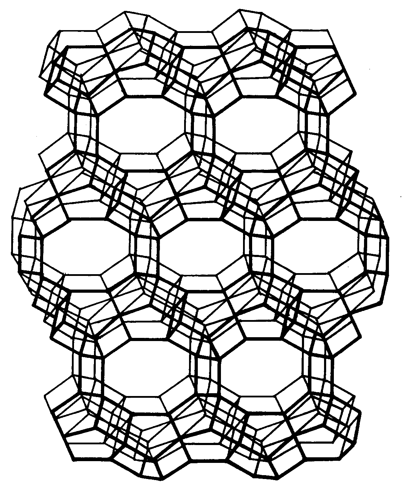

Die Struktur des kristallinen Materials zeigt Abbildung 1.
- Abbildung 1:: RUB-13 Gerüststruktur parallel zur Achse [001]

## Patentansprüche

1. Kristalline Festkörper von Boro-, Alumo-, Gallo-, Titano-, Vanado-, Zinkosilikaten oder deren Gemische mit RUB-13 Struktur, dadurch gekennzeichnet, daß sie innerhalb einer monoklinen Raumgruppe vorliegen und ein Röntgenbeugungsmuster aufweisen, in dem mindestens die folgenden Reflexe (hkl) bei den angegebenen Beugungswinkeln auftreten:
| h | k | l | Intensität I/Iₒ | Beugungswinkel 2 Theta |
|---|---|---|---|---|
| 0 | 2 | 0 | sehr stark | 10.26 |
| 0 | 1 | 1 | sehr stark | 9.79 |
| -1 | 3 | 1 | schwach | 4.98 |
| 0 | 4 | 1 | mittel | 4.53 |
| -2 | 0 | 1 | mittel | 4.52 |
| -1 | 1 | 2 | mittel | 4.46 |

2. Kristalline Festkörper von Borosilikat mit RUB-13 Struktur, dadurch gekennzeichnet, daß das molare Verhältnis von Si/(Si+B) Werte von 0,95:1 bis 1:1 beträgt.

3. Kristalline Festkörper von Boro-, Alumo-, Gallo-, Titano-, Vanado-, Zinkosilikaten oder deren Gemische mit RUB-13 Struktur nach Anspruch 1, hergestellt durch hydrothermale Kristallisation von Siliciumdioxid, einer Verbindung A-Oₙ, in der A Bor, Aluminium, Gallium, Titan, Vanadium oder Zink und n die Wertigkeit des Elements A bedeutet, und einer Aminverbindung der allgemeinen Formel I 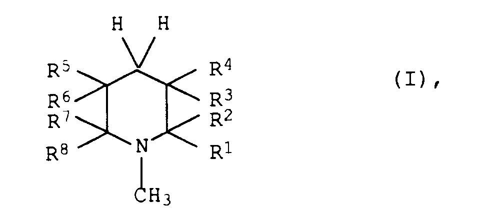 in der R¹ bis R⁸ Wasserstoff oder Methyl bedeuten, oder einer Diaminverbindung der allgemeinen Formel II
H₂N - (CH₂)ᵣ - NH₂ (II),
in der r eine ganze Zahl von 1 bis 5 bedeutet, oder deren Gemische im wesentlichen in Abwesenheit einer Alkali- oder Erdalkalimetallverbindungen.

4. Kristalline Festkörper von Boro-, Alumo-, Gallo-, Titano-, Vanado-, Zinkosilikaten oder deren Gemische mit RUB-13 Struktur nach Anspruch 1, hergestellt durch hydrothermale Kristallisation von Siliciumdioxid, einer Verbindung A-Oₙ, in der A Bor, Aluminium, Gallium, Titan, Vanadium oder Zink und n die Wertigkeit des Elements A bedeutet, und einer Aminverbindung der allgemeinen Formel I 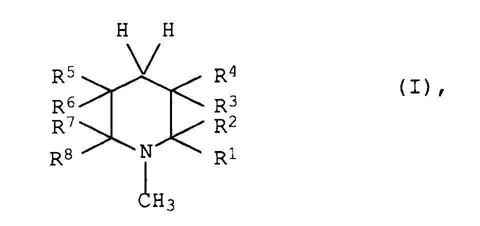 in der R¹ bis R¹⁰ Wasserstoff oder Methyl bedeuten, oder einer Diaminverbindung der allgemeinen Formel II
H₂N - (CH₂)ᵣ - NH₂ (II),
in der r eine ganze Zahl von 2 bis 3 bedeutet, oder deren Gemische im wesentlichen in Abwesenheit einer Alkali- oder Erdalkalimetallverbindungen.

5. Kristalline Festkörper von Boro-, Alumo-, Gallo-, Titano-, Vanado-, Zinkosilikaten oder deren Gemische mit RUB-13 Struktur nach Anspruch 1, hergestellt durch hydrothermale Kristallisation eines Synthesegels der molaren Zusammensetzung: 5:1 bis 0,1:1 SiO₂/AO, 25:1 bis 250:1 H₂O/SiO₂, 2,5:1 bis 1,5:1 Amin- und/oder Diaminverbindung/SiO₂.

6. Kristalline Festkörper von Boro-, Alumo-, Gallo-, Titano-, Vanado-, Zinkosilikaten oder deren Gemische mit RUB-13 Struktur nach Anspruch 1, hergestellt durch hydrothermale Kristallisation von Siliciumdioxid, einer Verbindung A-Oₙ, in der A Bor, Aluminium, Gallium, Titan, Vanadium oder Zink und n die Wertigkeit des Elements A bedeutet, und einer Piperidinlösung von Piperidin oder methylsubstituiertem Piperidin im molaren Bereich von Silizium zu Piperidin von 0,4:1 bis 0,8.

7. Verwendung der kristallinen Festkörper von Boro-, Alumo-, Gallo-, Titano-, Vanado-, Zinkosilikaten oder deren Gemische mit RUB-13 Struktur nach Anspruch 1 als Katalysator und/oder Katalysatorträger.

8. Verwendung der kristallinen Festkörper von Boro-, Alumo-, Gallo-, Titano-, Vanado-, Zinkosilikaten oder deren Gemische mit RUB-13 Struktur nach Anspruch 1 als Sorptionsmittel.

9. Verwendung der kristallinen Festkörper von Boro-, Alumo-, Gallo-, Titano-, Vanado-, Zinkosilikaten oder deren Gemische mit RUB-13 Struktur nach Anspruch 1 als Pigment.

10. Verwendung der kristallinen Festkörper von Boro-, Alumo-, Gallo-, Titano-, Vanado-, Zinkosilikaten oder deren Gemische mit RUB-13 Struktur nach Anspruch 1 in elektronischen und/oder optischen Bauteilen.
